# EUROPEAN PATENT APPLICATION

(11) **EP 4 513 777 A1**
(43) Date of publication of application: **26.02.2025**
(21) Application number: 23811116.5
(22) Date of filing: 25.05.2023
(51) Int. Cl.: H04B 7/0456

(54) **METHOD AND APPARATUS FOR WIRELESS COMMUNICATION**

(30) Priority: 27.05.2022 CN 202210591458; 31.05.2022 CN 202210606172
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Zhang, Fan
(86) International application number: PCT/CN2023/096178
(87) International publication number: WO 2023/227046

(57) **Abstract**

Disclosed are a method and an apparatus for wireless communication. A first node receiving a first reference signal; sending first channel information and first CQI, wherein the measurement of the first reference signal is used for generating the first channel information; the calculation of the first CQI is related to the type of the first channel information, and the type of the first channel information is one of PMI and a first type. When the type of the first channel information is PMI, the calculation of the first CQI uses a precoding matrix indicated by the first channel information as a condition; when the type of the first channel information is the first type, a first channel matrix is used for generating the first CQI, the first channel matrix being only obtainable for the first node. The present application improves the CQI performance and has good compatibility.

## Description

### TECHNICAL FIELD

The present application relates to methods and devices in wireless communication systems, and in particular to a scheme and device for Channel Quality Indicator (CQI) in a wireless communication system.

### BACKGROUND

In traditional wireless communications, the UE (i.e., User Equipment) report may include at least one of a variety of auxiliary information, such as CSI (i.e., Channel Status Information), Beam Management-related auxiliary information, localization-related auxiliary information and so on. The CSI includes at least one of CSI-RS Resource Indicator (CRI), Rank Indicator (RI), Precoding Matrix Indicator (PMI), or Channel quality indicator (CQI).

The network device selects appropriate transmission parameters for the UE based on the UE's report, such as the cell being camped, Modulation and Coding Scheme (MCS), Transmitted Precoding Matrix Indicator (TPMI), Transmission Configuration Indication (TCI) and other parameters. In addition, UE reporting can be used to optimize network parameters such as better cell coverage, switching base station based on UE location, etc.

In the New Radio (NR) system, the priority of the CSI reports is defined, and the priority is used to determine whether to assign CSI Processing Unit (CPU) resources for updating corresponding CSI reports, or whether to drop the corresponding CSI reports.

### SUMMARY

With the increase in the number of antennas, the traditional PMI feedback method brings a large amount of redundancy overhead, therefore, CSI compression based on AI (i.e., Artificial Intelligence) or ML (i.e., Machine Learning) was set up for project in NR R (release) 18. In conventional multi-antenna systems, CQI is usually calculated on condition of PMI; for example, based on the assumption that the PMI reported by the UE (i.e., User Equipment) is adopted by the base station. The applicant has found through research that the ML/AI-based CSI calculation is very different from the traditional CSI calculation, and the UE may not be able to get the channel information recovered at the base station side in real time, so that the traditional method of calculating the CQI will be challenged.

To address the above problem, the present application provides a solution. It should be noted that while a large number of embodiments of the present application are directed to AI/ML, the present application is also applicable to traditional solutions, e.g., linear channel reconstruction-based solutions; in particular, it is taken into account that specific channel reconstruction algorithms are likely to be non-standardized or implemented by hardware equipment vendors themselves. Further, the use of a unified UE reporting scheme can reduce implementation complexity or improve performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The interpretation of terminology in the present application can refer to the descriptions in TS37 series and TS38 series of the 3rd Generation Partner Project (3GPP) protocols, if necessary.

The present application provides a method in a first node for wireless communications, comprising:

A first node for wireless communications, comprising:
a first receiver, receiving a first reference signal; and
a first transmitter, transmitting first channel information and a first CQI;
herein, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node.

In one embodiment, the first channel information and the first CQI are configured by a same Radio Resource Control (RRC) Information Element (IE).

In one embodiment, the same RRC IE is a CSI-ReportConfig IE.

In one embodiment, the first channel information and the first CQI are configured by a reportQuantity in a CSI-ReportConfig IE.

In one embodiment, the above method avoids inaccurate CQI calculations caused by the first channel information of the first type.

In one embodiment, the above method provides a more accurate reflection of the channel quality.

In one embodiment, the above method has good compatibility.

In one embodiment, the above method avoids the first node's calculation of the CQI based on a first recovered channel matrix, reducing the complexity of the first node; the first recovered channel matrix is recovered by the second node based on the first channel information.

In one embodiment, the above method avoids the use of the same channel reconstructor for the first node and the second node, thus improving flexibility.

In one embodiment, the above method avoids the use of the same channel reconstructor for products from different vendors, thus improving flexibility.

Typically, the first channel information is related to the first channel matrix.

Specifically, according to one aspect of the present application, the above method is characterized in that when the type of the first channel information is the first type, the first channel matrix is an output obtained after inputting the first channel information to a first reference decoder, the first reference decoder being available only for the first node.

In one embodiment, the above method takes into account the effect of errors introduced by the decoder on the first CQI and thus avoids the first CQI's being too high.

In one embodiment, the above method allows the first node and the second node to process the second channel information using different decoders, which improves the flexibility of implementation by hardware vendors.

Specifically, according to one aspect of the present application, the above method is characterized in that when the type of the first channel information is the first type, the first channel matrix is used together with a first amount of adjustment to calculate the first CQI.

The method described above allows the first node to adjust the calculation of the first CQI via the first amount of adjustment, ensuring the accuracy of the first CQI.

Typically, the application of the first amount of adjustment causes the first CQI to be reduced or unchanged.

Specifically, according to one aspect of the present application, the above method is characterized in that when the type of the first channel information is the first type, calculation of the first CQI is conditioned on that a first reference channel matrix is used for precoding, and the first amount of adjustment is used together with the first channel matrix to generate the first reference channel matrix.

In one embodiment, the above method facilitates a more accurate calculation of the first CQI, overcoming distortions due to unfavorable factors, the unfavorable factors including, for example, a loss of quantization of the first channel information, or the difference between a pre-coding matrix actually used by the second node and that understood by the first node.

Specifically, according to one aspect of the present application, the above method is characterized in that when the type of the first channel information is the first type, a channel quality calculated conditioned on that the first channel matrix is used for precoding is used together with the first amount of adjustment to determine the first CQI.

The above method is simpler to implement and reduces hardware complexity.

In one embodiment, the first CQI is obtained by subtracting the first amount of adjustment from a value calculated on the condition that the first channel matrix is used for precoding.

Specifically, according to one aspect of the present application, the above method is characterized in that the first channel matrix is a codebook-based precoding matrix, the first type being non-codebook-based channel information.

In one embodiment, the first channel matrix is a pre-coding matrix used for computing a CQI based on the assumption that the type of the first channel information is PMI.

In one embodiment, the first channel matrix is a precoding matrix in a type I codebook.

In one embodiment, the first channel matrix is a precoding matrix in a type II codebook.

In one embodiment, the first channel matrix is a precoding matrix in an enhanced type II codebook.

In one embodiment, the same RRC IE is used to indicate the type of codebook to which the first channel matrix belongs.

In one embodiment, the non-codebook channel information is what cannot be indicated by the PMI or is not selected from candidate codebooks.

In one embodiment, the non-codebook channel information is used for precoding.

The above aspects provide good compatibility.

Specifically, according to one aspect of the present application, the above method is characterized in comprising:
generating the first channel information utilizing a first encoder;
herein, an input to the first encoder includes the first channel matrix, the first encoder being obtained through training.

In one embodiment, the above method avoids quantization error of the first node in monitoring the first channel information in real time and reduces the hardware complexity of the first node.

Specifically, according to one aspect of the present application, the above method is characterized in that the training for the first encoder is used to determine the first amount of adjustment.

The above method ensures the accuracy of the first amount of adjustment.

In one embodiment, the training for the first encoder is performed in the first node.

In one embodiment, the training for the first encoder is performed by the transmitter of the first reference signal.

Specifically, according to one aspect of the present application, the above method is characterized in comprising:
the first receiver, receiving a first signaling, the first signaling indicating the first amount of adjustment.

In one embodiment, the above method is beneficial for ensuring the robustness of the first CQI.

The present application provides a method in a second node for wireless communications, comprising:
a second transmitter, transmitting a first reference signal; and
a second receiver, receiving first channel information and a first CQI;
herein, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second node.

Specifically, according to one aspect of the present application, the above method is characterized in that the first channel matrix is a codebook-based precoding matrix, the first type being non-codebook-based channel information.

In one embodiment, the first channel matrix is a pre-coding matrix used for computing a CQI based on the assumption that the type of the first channel information is PMI.

Specifically, according to one aspect of the present application, the above method is characterized in comprising:
the second receiver, generating a first recovered channel matrix utilizing a first decoder;
herein, an input to the first decoder comprises the first channel information, the first decoder being obtained through training.

Specifically, according to one aspect of the present application, the above method is characterized in comprising:
the second transmitter, transmitting a first signaling, the first signaling indicating a first amount of adjustment;
herein, when the type of the first channel information is the first type, the first channel matrix is used together with the first amount of adjustment to calculate the first CQI.

Specifically, according to one aspect of the present application, the above method is characterized in that when the type of the first channel information is the first type, the first channel matrix is an output obtained after inputting the first channel information to a first reference decoder, the first reference decoder being only available for the transmitter of the first channel information.

Specifically, according to one aspect of the present application, the above method is characterized in that when the type of the first channel information is the first type, the first channel matrix is used together with a first amount of adjustment to calculate the first CQI.

Specifically, according to one aspect of the present application, the above method is characterized in that when the type of the first channel information is the first type, calculation of the first CQI is conditioned on that a first reference channel matrix is used for precoding, and the first amount of adjustment is used together with the first channel matrix to generate the first reference channel matrix.

Specifically, according to one aspect of the present application, the above method is characterized in that when the type of the first channel information is the first type, a channel quality calculated conditioned on that the first channel matrix is used for precoding is used together with the first amount of adjustment to determine the first CQI.

The present application provides a first node for wireless communications, comprising:
a first receiver, receiving a first reference signal; and
a first transmitter, transmitting first channel information and a first CQI;
herein, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node.

The present application provides a second node for wireless communications, comprising:
a second transmitter, transmitting a first reference signal; and
a second receiver, receiving first channel information and a first CQI;
herein, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second node.

### BRIEF DESCRIPTION OF THE DRAWINGS

Other features, objects and advantages of the present invention will become more apparent from the detailed description of non-restrictive embodiments taken in conjunction with the following drawings:
FIG. 1 illustrates a flowchart of communication of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of hardcore modules in a communication node according to one embodiment of the present application.
FIG. 5 illustrates a flowchart of transmission between a first node and a second node according to one embodiment of the present application.
FIG. 6 illustrates a schematic diagram of calculating a first CQI according to one embodiment of the present application.
FIG. 7 illustrates a schematic diagram of an Al processing system according to one embodiment of the present application.
FIG. 8 illustrates a flowchart of transmission of first channel information according to one embodiment of the present application.
FIG. 9 illustrates a schematic diagram of a first encoder according to one embodiment of the present application.
FIG. 10 illustrates a schematic diagram of a first function according to one embodiment of the present application.
FIG. 11 illustrates a schematic diagram of a decoding layer group according to one embodiment of the present application.
FIG. 12 illustrates a structure block diagram of a processing device used in a first node according to one embodiment of the present application.
FIG. 13 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

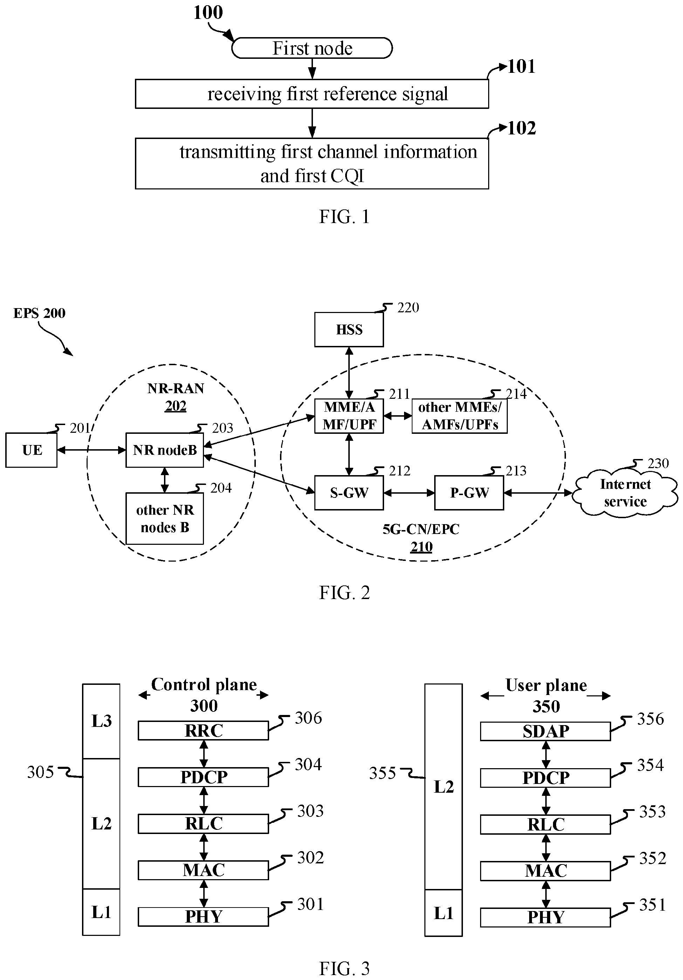

Embodiment 1 illustrates a flowchart of communication of a first node according to one embodiment of the present application, as shown in FIG. 1.

The first node 100 receives a first reference signal in step 101; and transmits first channel information and a first CQI in step 102.

In Embodiment 1, a measurement of the first reference signal is used to generate the first channel information; calculation of the first CQI is related to a type of the first channel information; the type of the first channel information is one of a PMI (i.e., Precoding matrix indicator) or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node 100.

In one embodiment, the first channel matrix and the first channel information are associated.

In one embodiment, if the type of the first channel information is PMI, the receiver of the first channel information is able to fully determine, based on the first channel information (and, for example, CRI, RI, and the like), the codebook index or precoding matrix recommended by the first node 100, and thus the first node 100 is able to calculate the first CQI conditioned on the recommended precoding matrix; whereas, if the type of the first channel information is the first type, the receiver of the first channel information and the first node 100 may have different interpretations with respect to the latter's recommended pre-coding matrix, and therefore a new method of calculating the CQI is required.

In one embodiment, the first channel matrix being available only for the first node means that of the two of the first node 100 and the transmitter of the first reference signal, the first channel matrix is available only for the first node 100.

In one embodiment, the first channel matrix being available only for the first node means that the first channel matrix is generated at the first node 100, and that the first node 100 does not transmit, via an air interface, control information that can be used to fully recover the first channel matrix.

In one embodiment, the first channel matrix being available only for the first node means that the first channel matrix is generated at the first node 100, and that at least before sending the first CQI the first node 100 does not transmit, via an air interface, control information that can be used to fully recover the first channel matrix.

In one embodiment, the first channel matrix being available only for the first node means that the first channel matrix is generated at the first node 100 and that the transmitter of the first reference signal has not obtained the first channel matrix.

In one embodiment, the first channel matrix being available only for the first node means that the first channel matrix is generated at the first node 100 and that the transmitter of the first reference signal has not obtained the first channel matrix at least at the time of applying the first CQI, the act of applying the first CQI comprising determining an MCS (i.e., Modulation and Coding Scheme) for downlink transmission based on the first CQI.

In one embodiment, the first reference signal comprises at least one channel state information (CSI)-reference signal (RS) resource.

In one embodiment, the first reference signal comprises at least one downlink RS resource for channel measurement and at least one downlink RS resource for interference measurement.

Typically, the measurement of the first reference signal is used to calculate the first CQI.

In one embodiment, the phrase that the calculation of the first CQI is conditioned on a precoding matrix indicated by the first channel information comprises: the first node 100 calculating the first CQI based on the assumption that the transmitter of the first reference signal employs the precoding matrix indicated by the first channel information.

In one embodiment, the phrase the first channel matrix being used to generate the first CQI comprises: the calculation of the first CQI being conditioned on the first channel matrix being used for precoding.

In one embodiment, the phrase the first channel matrix being used to generate the first CQI comprises: the first node 100 calculating the first CQI based on the assumption that the transmitter of the first reference signal employs the first channel matrix.

Within the limitations of the above methods or embodiments, the specific algorithm used to calculate the first CQI is determined by the manufacturer of the first node 100 in its sole discretion or is implementation related. An exemplary but non-limiting implementation is described below:

The first node 100 firstly measures in the first reference signal reference signal resources for channel measurement to obtain a channel parameter matrix **H_{r×*t*}** , where *r* ' *t* are the number of receiving antennas and the number of antenna ports for transmitting, respectively; under the condition of using a precoding matrix **W_{t×*l*}** , the encoded channel parameter matrix is **H**_{r×*t*} · **W_{t×*l*}** , where ***l*** is a rank or the number of layers; an equivalent channel capacity of **H**_{r×*t*} · **W_{t×*l*}** is calculated using, for example, SINR (i.e., Signal Interference Noise Ratio), EESM (i.e., Exponential Effective SINR Mapping), or RBIR (i.e., Received Block mean mutual Information Ratio) criterion, and then the first CQI is determined by the equivalent channel capacity by means of, for example, looking up a table. Generally, the calculation of the equivalent channel capacity requires the first node 100 to estimate noise and interference, and if the first reference signal includes RS resources for interference measurement, the first node 100 may utilize these RS resources to more accurately measure interference or noise. In general, the direct mapping between the equivalent channel capacity and the value of the CQI is dependent on hardware related factors such as receiver's performance or modulation mode. When the type of the first channel information is PMI, the precoding matrix **W_{t×*l*}** is indicated by the first channel information; when the type of the first channel information is the first type, it is difficult for the transmitter of the first reference signal to obtain the precoding matrix **W_{t×*l*}** in time.

In one embodiment, the first channel matrix is a codebook-based precoding matrix, the first type being non-codebook-based channel information.

In one embodiment, the first channel matrix is a pre-coding matrix used for computing a CQI based on the assumption that the type of the first channel information is PMI.

In one embodiment, the precoding matrix for calculating CQI based on the assumption that the type of the first channel information is PMI is codebook-based.

Channel information of the first type is typically superior to that of PMI, and for a channel matrix recovered using the first channel information of the first type, the first channel matrix in the above two embodiments is equivalent to a low bound of the precoding performance, and hence the calculated CQI is also a lower bound CQI, which provides better robustness.

In one embodiment, the receiver of the first channel information can adjust the lower bound CQI on its own to obtain higher spectral efficiency, where common approaches include accordance with ACK rate or outer-loop control.

In one embodiment, the first node 100 generates the first CQI utilizing a first amount of adjustment, the first amount of adjustment being used to compensate for a performance gap between the low bound of precoding performance and the first channel information of the first type.

In one embodiment, the type of the first channel information is used to determine the calculation of the first CQI.

In one embodiment, the first channel matrix comprises at least one vector, each element of the at least one vector comprising a complex number.

In one embodiment, the first channel matrix comprises at least one vector, each element of the at least one vector comprising a phase.

In one embodiment, the first channel matrix comprises at least one vector, each element in the at least one vector comprising a phase, all elements of each vector among the at least one vector having the same magnitude.

In one embodiment, the first channel matrix comprises at least one eigenvector.

In one embodiment, the first channel matrix comprises at least one eigenvector and an eigenvalue corresponding to each one of the at least one eigenvector.

In one embodiment, each element of the first channel matrix is a channel impulse response from a transmitting antenna port to a receiving antenna.

In one embodiment, each element of the first channel matrix is a Channel Impulse Response between a transmitting antenna port and a receiving antenna on a Resource Block (RB) or subband.

Typically, when the type of the first channel information is the first type, the first channel information is generated by an artificial intelligence-based method.

In one embodiment, when the type of the first channel information is the first type, the calculation of the first CQI relies on a plurality of channel matrices, the first channel matrix being one of the plurality of channel matrices; measurements for the first reference signal are used to generate the plurality of channel matrices.

In one embodiment, the plurality of channel matrices correspond to a plurality of frequency domain units, respectively, each frequency domain unit of the plurality of frequency domain units comprising at least one Resource Block.

In one embodiment, each frequency domain unit of the plurality of frequency domain units is a subband.

In one embodiment, the first channel information is transmitted on a Physical Uplink Shared Channel (PUSCH).

In one embodiment, the first channel information and the first CQI are transmitted on a same PUSCH.

In one embodiment, when the type of the first channel information is the first type, the first channel matrix is an output obtained after inputting the first channel information to a first reference decoder, the first reference decoder being available only for the first node.

In one subembodiment, the first CQI is calculated on the condition that the first channel matrix is used for precoding.

In one embodiment, the first reference decoder is artificial intelligence (AI) based.

In one embodiment, when the type of the first channel information is the first type, the first channel matrix is used together with a first amount of adjustment to calculate the first CQI.

Typically, the application of the first amount of adjustment causes the first CQI to be reduced or unchanged.

In one embodiment, the first amount of adjustment is determined by the first node itself.

In one embodiment, the first amount of adjustment is calculated by the first node.

In one embodiment, the first amount of adjustment is configurable.

In one embodiment, the first amount of adjustment is predetermined.

In one embodiment, a first amount of adjustment is a real number not greater than 1 and not less than 0.

In one embodiment, a first amount of adjustment is a real number greater than 0 and less than 1.

In one embodiment, the first amount of adjustment is an integer.

In one embodiment, the first amount of adjustment is a non-negative integer.

In one embodiment, the first amount of adjustment is an index.

In one embodiment, the first amount of adjustment is used to determine a first matrix.

In one embodiment, the first amount of adjustment is used to determine a first matrix, and the first channel matrix and the first matrix are used together to determine the first reference channel matrix.

In one embodiment, when the type of the first channel information is the first type, calculation of the first CQI is conditioned on that a first reference channel matrix is used for precoding, and the first amount of adjustment is used together with the first channel matrix to generate the first reference channel matrix.

In one embodiment, the first reference channel matrix is obtained by multiplying the first amount of adjustment by the first channel matrix parameter.

In one subembodiment, a first amount of adjustment is a real number greater than 0 and less than 1.

In one embodiment, when the type of the first channel information is the first type, a channel quality calculated conditioned on that the first channel matrix is used for precoding is used together with the first amount of adjustment to determine the first CQI.

In one embodiment, the channel quality calculated on the condition that the first channel matrix is used for precoding is a CQI index, and the first CQI is a value obtained by subtracting the first amount of adjustment from the CQI index.

In one subembodiment, the first amount of adjustment is a positive integer or 0.

In one subembodiment, the first amount of adjustment is less than 16.

In one embodiment, the channel quality calculated on the condition that the first channel matrix is used for precoding is an equivalent channel quality, and the first CQI is a CQI index obtained by subtracting the first amount of adjustment from the equivalent channel quality before looking up the table.

In one subembodiment, the first amount of adjustment is measured in dB.

In one subembodiment, the first amount of adjustment does not exceed 12 dB.

### Embodiment 2

Embodiment 2 illustrates a schematic diagram of a network architecture according to one embodiment of the present application, as shown in FIG. 2. FIG. 2 illustrates an architecture of 5G New Radio (NR), Long-Term Evolution (LTE) and Long-Term Evolution Advanced (LTE-A) systems. The 5G NR or LTE network architecture 200 may be called a 5G System/ Evolved Packet System (5GS/EPS) or other suitable terminology. The EPS 200 may comprise one UE 201, an NG-RAN 202, an Evolved Packet Core/5G-Core Network (EPC-5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S lING interface. The EPC/5G-CN 210 comprises a Mobility Management Entity (MME)/ Authentication Management Field(AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application, and the gNB203 corresponds to the second node in the present application.

In one embodiment, the UE201 supports the generation of reports taking advantage of Artificial Intelligence (AI) or Machine Learning.

In one embodiment, the UE201 supports the generation of a trained model using the training data or the generation of some of parameters in the trained model using the training data.

In one embodiment, the UE201 supports the determination of at least part of parameters of Conventional Neural Networks (CNN) for CSI reconstruction through training.

In one embodiment, the UE 201 is a terminal supporting Massive-MIMO.

In one embodiment, the gNB203 supports Massive-MIMO-based transmission.

In one embodiment, the gNB203 supports the decompression of CSI taking advantage of AI or Deep Learning.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application are respectively the UE201 and the gNB203.

### Embodiment 3

Embodiment 3 illustrates a schematic diagram of an embodiment of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first node (UE, or RSU in V2X, vehicle-mounted equipment or vehicle-mounted communication module) and a second node (gNB, UEUE, or RSU in V2X, vehicle-mounted equipment or vehicle-mounted communication module), or between two UEs is represented by three layers, which are: layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides data encryption and integrity protection, and the PDCP sublayer 304 also provides support for inter-cell mobility of the second node between first nodes. The RLC sublayer 303 provides packet segmentation and reassembly, retransmission of a lost packet via ARQ, and it also provides duplicate packet detection and protocol error detection. The MAC sublayer 302 provides mapping between the logical and transport channels and multiplexing of logical channels. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several upper layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first reference signal in the present application is generated by the PHY 301.

In one embodiment, the first channel information in the present application is generated by the PHY 301.

In one embodiment, the first channel information in the present application is generated by the MAC sublayer 302.

In one embodiment, the first CQI in the present application is generated by the PHY 301.

In one embodiment, the first signaling in the present application is generated by the RRC sublayer 306.

In one embodiment, the first signaling in the present application is generated by the MAC sublayer 302.

### Embodiment 4

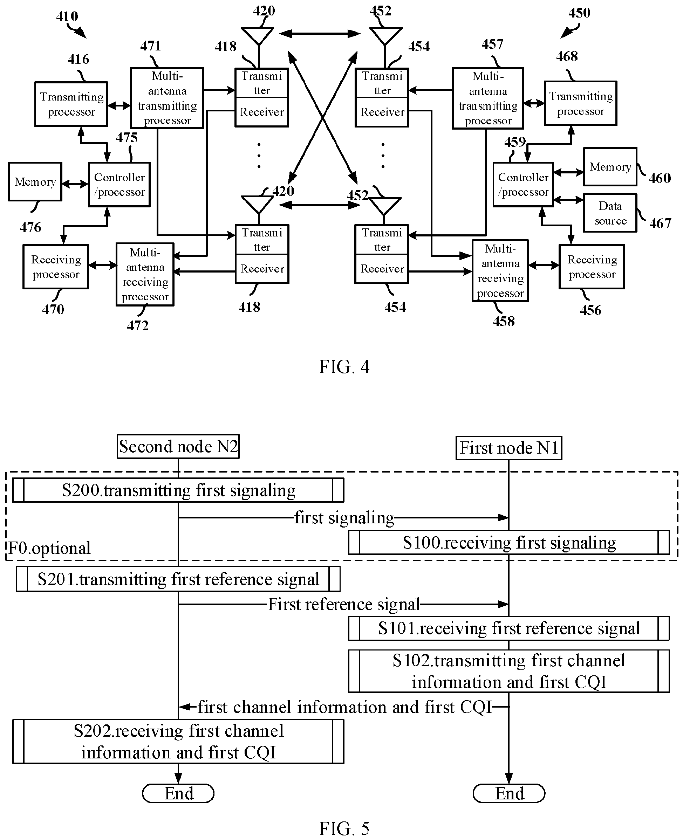

Embodiment 4 illustrates a schematic diagram of hardcore modules in a communication node according to one embodiment of the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs channel coding and interleaving so as to ensure a Forward Error Correction (FEC) at the second communication device 410 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 de-interleaves and channel decodes the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device (node) 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs channel coding, interleaving and modulation and mapping, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least receives a first reference signal; and transmits first channel information and a first CQI; herein, a measurement of the first reference signal is used to generate the first channel information; calculation of the first CQI is related to a type of the first channel information; the type of the first channel information is one of a PMI (i.e., Precoding matrix indicator) or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being only available for the first communication device 450.

In one embodiment, the first communication device 450 comprises a memory that stores a computer readable instruction program. The computer readable instruction program generates actions when executed by at least one processor. The actions include: receiving the first reference signal; and transmitting the first channel information and the first CQI.

In one embodiment, the second communication device 410 comprises at least one processor and at least one memory. The at least one memory comprises computer program codes; the at least one memory and the computer program codes are configured to be used in collaboration with the at least one processor. The second communication device 410 at least transmits a first reference signal; and receives first channel information and a first CQI; herein, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second communication device 410.

In one embodiment, the second communication device 410 comprises a memory that stores a computer readable instruction program. The computer readable instruction program generates actions when executed by at least one processor. The actions include: transmitting the first reference signal; and receiving the first channel information and the first CQI.

In one embodiment, the first communication device 450 corresponds to the first node in the present application.

In one embodiment, the second communication device 410 corresponds to the second node in the present application.

In one embodiment, the first communication device 450 is a UE, and the second communication device 410 is a base station.

In one embodiment, the antenna 452, the receiver 454, the multi-antenna receiving processor 458 and the receiving processor 456 are used for receiving a first reference signal.

In one embodiment, the controller/processor 459 is used for receiving a first reference signal.

In one embodiment, the controller/processor 459 is used for generating first channel information and a first CQI.

In one embodiment, the antenna 452, the transmitter 454, the multi-antenna transmitting processor 457, the transmitting processor 468, and the controller/processor 459 are used for transmitting first channel information and a first CQI.

In one embodiment, the antenna 420, the transmitter 418, the multi-antenna transmitting processor 471 and the transmitting processor 416 are used for transmitting the first reference signal.

In one embodiment, the controller/processor 475 is used for transmitting the first reference signal.

In one embodiment, the antenna 420, the receiver 418, the multi-antenna receiving processor 472, the receiving processor 470, and the controller/processor 475 are used for receiving first channel information and a first CQI.

### Embodiment 5

Embodiment 5 illustrates a flowchart of transmission between a first node and a second node according to one embodiment of the present application, as shown in FIG. 5; steps in the box F0 of FIG. 5 are optional.

The first node N1 receives a first reference signal in step S101; and transmits first channel information and a first CQI in step S102;

the second node N2 transmits the first reference signal in step S201, and receives the first channel information and the first CQI in step S202.

In Embodiment 5, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is available for the first node N1 and is unavailable for the second node N2.

Typically, a first encoder is used to generate the first channel information when the type of the first channel information is the first type, the first encoder being obtained based on training.

In one embodiment, the first channel information is related to the first channel matrix.

In one embodiment, the first channel matrix is a non-codebook-based precoding matrix obtained by measuring the first reference signal, the non-codebook-based precoding matrix being specific to a subband or specific to a wideband.

In one subembodiment, the first channel matrix is generated using a conventional non-artificial intelligence-based method.

In one embodiment, the first channel matrix is a codebook-based precoding matrix obtained by measuring the first reference signal, the codebook-based precoding matrix being specific to a subband or specific to a wideband.

In one subembodiment, the codebook to which the first channel matrix belongs is a codebook indicated by the PMI.

In one embodiment, the first channel matrix is a precoding matrix indicated by the first channel information based on the assumption that the type of the first channel information is PMI.

In the above embodiment, based on the assumption that the type of the first channel information is PMI, the first node N1 selects a suitable precoding matrix/codebook index as the first channel matrix from a candidate codebook using conventional methods. The candidate codebook is dependent on the Radio Access Technology (RAT) or configuration parameters of the base station (e.g. the transmission mode in LTE or the number of antenna ports in NR) or the RI reported by the first node N1. The above embodiment is advantageous in that it is compatible with existing CQI generation schemes; furthermore, in general the performance of CSIs reported based on artificial intelligence is better than conventional CSIs based on codebook schemes, and the above embodiment ensures transmission robustness. It should be noted that since the actual type of the first channel information is the first type instead of PMI, the first channel information is not indicative of the first channel matrix, i.e., in the above embodiment the second node N2 is not able to obtain the first channel matrix; thus, the above embodiment is not compatible with commonly used schemes in existing cellular network systems.

In one embodiment, the first channel matrix is generated using a conventional non-artificial intelligence-based method.

In one embodiment, the second node N2 transmits a first signaling in step S200, and the first node N1 receives the first signaling in step S100; where the first signaling indicates a first amount of adjustment, and when the type of the first channel information is the first type, the first channel matrix is used together with the first amount of adjustment to calculate the first CQI.

The first amount of adjustment is capable of compensating for CQI calculation error, the CQI calculation error resulting from the error between the first channel matrix and a precoding matrix recovered by the second node N2 based on the first channel information; for example the first CQI calculated when the first channel matrix is non-codebook based may be overly optimistic, thus requiring the first amount of adjustment to adjust the first CQI downwardly; and also for example the first CQI calculated when the first channel matrix is non-codebook based may be too conservative, thus requiring the first amount of adjustment to adjust the first CQI upwardly.

In one embodiment, the first signaling comprises a MAC Control Element (CE).

In one embodiment, the first signaling comprises RRC Information Elements (IEs).

In one embodiment, the training for generating the first encoder is performed by the first node N1.

In one embodiment, the training for generating the first encoder is performed by the second node N2.

In one embodiment, the training for generating the first encoder is used to generate a first decoder, the first decoder recovering a precoding matrix based on the first channel information.

In one embodiment, the training for generating the first encoder is used to generate the first amount of adjustment.

In one subembodiment, the training for generating the first encoder is performed by the second node N2, the steps in the box F0 being present.

In one subembodiment, the training for generating the first encoder is performed by the first node N1, the steps in the box F0 being not present.

In one embodiment, when the type of the first channel information is the first type, calculation of the first CQI is conditioned on that a first reference channel matrix is used for precoding, and the first reference channel matrix is obtained after the first amount of adjustment is multiplied by the first channel matrix.

In one subembodiment, the first channel matrix is a non-codebook-based precoding matrix obtained by measuring the first reference signal, the non-codebook-based precoding matrix being specific to a subband or specific to a wideband, the first amount of adjustment being greater than 0 and no greater than 1.

In one subembodiment, the first channel matrix is a codebook-based precoding matrix obtained by measuring the first reference signal, the codebook-based precoding matrix being specific to a subband or specific to a wideband, the first amount of adjustment being no less than 1.

In one embodiment, when the type of the first channel information is the first type, a CQI index is calculated conditioned on the first channel matrix being used for precoding; the first CQI is the difference obtained by subtracting the first amount of adjustment from the CQI index, or, alternatively, the first CQI is the sum obtained by adding the CQI index to the first amount of adjustment.

### Embodiment 6

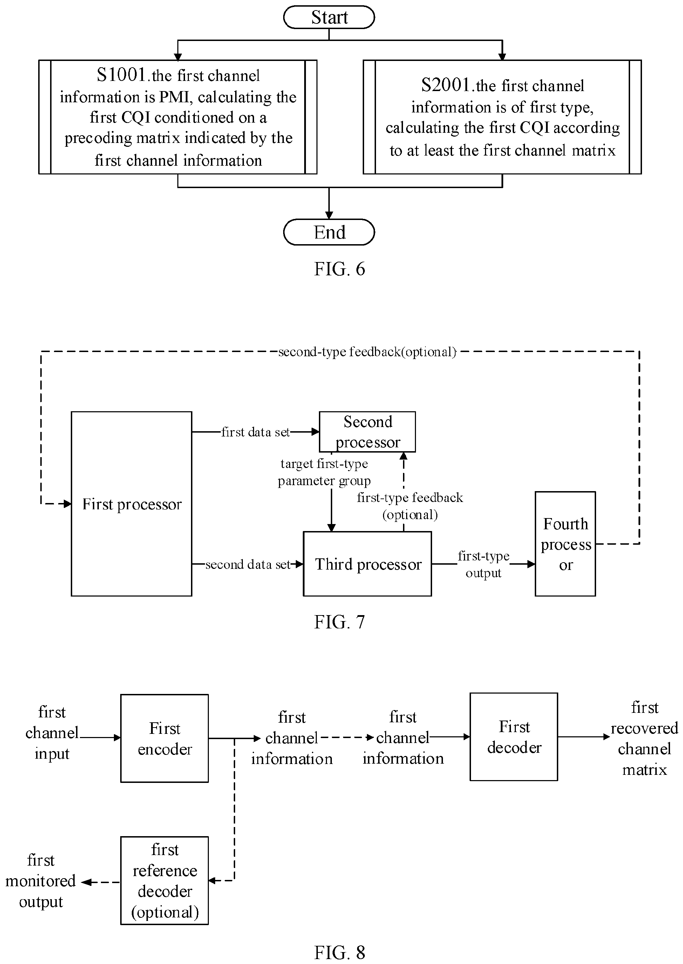

Embodiment 6 illustrates a schematic diagram of calculating a first CQI according to one embodiment of the present application, as shown in FIG. 6. In Embodiment 6, the method of calculating the first CQI for the first node is related to the type of the first channel information.

Specifically, whether the first node performs the step S1001 or step S2001 is related to the type of the first channel information; in step S1001, the first channel information is PMI, and the first node calculates the first CQI conditioned on a precoding matrix indicated by the first channel information; in step S2001, the first channel information is of a first type, and the first node calculates the first CQI conditioned on at least the first channel matrix.

In Embodiment 6, in step S2001, a receiver of the first channel information cannot obtain the first channel matrix based on the first channel information, or, the receiver of the first channel information recovers a channel matrix based on the first channel information that is different from the first channel matrix.

### Embodiment 7

Embodiment 7 illustrates a schematic diagram of an AI processing system according to one embodiment of the present application, as shown in FIG. 7. FIG. 7 comprises a first processor, a second processor, a third processor and a fourth processor.

In Embodiment 7, the first processor transmits a first data set to the second processor, and the second processor generates a target first-type parameter group according to the first data set, and then the second processor transmits the generated target first-type parameter group to the third processor, and the third processor utilizes the target first-type parameter group to process the second data set for obtaining a first-type output, and transmits the first-type output to the fourth processor.

In one embodiment, the third processor transmits first-type feedback to the second processor, the first-type feedback being used to trigger re-computing or updating the target first-type parameter group.

In one embodiment, the fourth processor transmits second-type feedback to the first processor, the second-type feedback being used to generate the first data set or the second data set, or the second-type feedback being used to trigger a transmission of the first data set or the second data set.

In one embodiment, the first processor generates the first data set and the second data set according to a measurement of a first radio signal, the first radio signal comprising a first reference signal.

In one embodiment, the first processor and the third processor belong to a first node, while the fourth processor belongs to a second node, where the first-type output comprises first channel information of a first type.

In one embodiment, the second processor belongs to a first node.

The above embodiment avoids a delivery of the first data set to a second node.

In one embodiment, the second processor belongs to a second node.

The above embodiment reduces the complexity of the first node.

In one embodiment, the first data set is Training Data, while the second data set is Interference Data, the second processor being used for training a model, the model trained being described by the target first-type parameter group.

In one embodiment, the third processor constructs a model according to the target first-type parameter group, and then inputs the second data set to the model constructed to obtain the first-type output, and transmits the first-type output to the fourth processor.

In one subembodiment, the third processor comprises a first encoder in the present application, the first encoder being described by the target first-type parameter group, and generation of the first-type output being performed by the first encoder.

In one embodiment, the third processor computes an error between the first-type output and actual data for determining the performance of the trained model; the actual data is data delivered from the first processor that is received after the second data set.

The above embodiment particularly applies to forecasting-related reporting.

In one embodiment, the third processor recovers a reference data set according to the first-type output, where an error between the reference data set and the second data set is used for generating the first-type feedback.

The recovery of the reference data set usually uses the inverse operation similar to the target first-type parameter group, and the embodiment above particularly applies to CSI Compression-related reporting.

In one embodiment, the first-type feedback is used for reflecting the performance of the trained model; when the performance of the trained model cannot meet requirements, the second processor will re-calculate the target parameter group of the first type.

In one subembodiment, the third processor comprises a first reference decoder in the present application, the first reference decoder being depicted by the target first-type parameter group. An input to the first reference decoder comprises the first-type output, and an output of the first reference decoder comprises the reference data set.

Typically, when the error is too large or there's been no update for too long, the performance of the trained model is assumed to be unsatisfactory.

In one embodiment, the third processor belonging to a second node, the first node reports the target first-type parameter group to the second node.

In one embodiment, the first amount of adjustment in the present application is generated by the second processor.

In one embodiment, the first amount of adjustment in the present application is generated by the third processor.

In one subembodiment of any of the above two embodiments, the first amount of adjustment is associated with the first encoder.

Based on the above embodiments, the generation of the first amount of adjustment may depend on implementations of all kinds of hardcore producers, where a non-restrictive implementing method is given as follows:

The second processor or the third processor computes a correlation between an input to a first encoder and an output by a first reference decoder (depicted by the target first-type parameter group), and then determines the first amount of adjustment according to the correlation. The input to the first encoder and the output by the first reference decoder are both pre-coding matrixes (including pre-coding vectors), where the correlation can be described for instance using a difference of 1 minus a Normalized Mean Square Error (NMSE) or a Generalized Cosine Similarity (GCS).

In one embodiment, with the probability of r1 the correlation is no less than the first amount of adjustment, r1 being a real number greater than 0 and less than 1.

In one embodiment, the r1 is fixed.

In one embodiment, the r1 is configurable.

In one embodiment, the r1 is greater than 0.5.

### Embodiment 8

Embodiment 8 illustrates a flowchart of transmission of first channel information according to one embodiment of the present application, as shown in FIG. 8. In FIG. 8, a first reference decoder is optional.

In Embodiment 8, a first encoder and a first decoder respectively belong to a first node and a second node; herein, the first encoder belongs to a first receiver, while the first decoder belongs to a second receiver.

The first receiver generates the first channel information utilizing a first encoder; herein, an input to the first encoder comprises the first channel input, the first encoder being obtained through training; the first channel input being obtained through a measurement of a first reference signal;
the first node sends the first channel information as feedback to the second node via an air interface;
the second receiver generates a first recovered channel matrix utilizing a first decoder; herein, an input to the first decoder comprises the first channel information, the first decoder being obtained through training.

Theoretically, the first encoder and the first decoder shall be seen as reciprocal operations to ensure that the first channel input is identical to the first recovered channel matrix; however, due to factors such as the complexity of implementation or radio overhead or delay, the first encoder and the first decoder in Embodiment 8 cannot guarantee a complete offset, so it cannot be ensured that the first channel input is totally the same as the first recovered channel matrix, leading to a result that the conventional way of computing CQI is no longer applicable, namely, it is impossible to find a precoding matrix for CQI computing, for which both sides have a consistent understanding.

In one embodiment, the first channel input is a channel parameter matrix, or, a matrix consisting of at least one Eigen vector.

In one embodiment, the first channel input is a first channel matrix.

In the above embodiments, the estimation of a first CQI is probably too optimistic, for which the corresponding compensation may be done through a first amount of adjustment, or be adjusted by the second node itself.

In one subembodiment, compared with not using the first amount of adjustment, the application of the first amount of adjustment makes the first CQI lower or unchanged.

In one embodiment, the first channel matrix is a pre-coding matrix used for computing a CQI based on the assumption that the type of the first channel information is PMI.

In the above embodiment, the specific implementation is to implement by the hardcore manufacture vendor itself, for instance, to select a precoding vector or precoding matrix sharing a maximum Generalized Cosine Similarity with the first channel input in a candidate codebook to serve as a first channel matrix, or, to select a precoding vector or precoding matrix sharing a minimum NMSE with the first channel input in a candidate codebook to serve as a first channel matrix; a typical candidate codebook is related to a number of layers of the first channel matrix, for the candidate codebook used by an NR system, refer to TS38.214, Section 5.2.2.2.

In one embodiment, the first channel matrix is a precoding matrix in a type II codebook.

In one embodiment, the first channel matrix is a precoding matrix in an enhanced type II codebook.

In the above embodiments, the estimation of a first CQI is probably too conservative, for which the corresponding compensation may be done through a first amount of adjustment, or be adjusted by the second node itself.

In one subembodiment, compared with not using the first amount of adjustment, the application of the first amount of adjustment makes the first CQI value higher or unchanged.

In one embodiment, the first receiver also comprises a first reference decoder, where an input to the first reference decoder comprises the first channel information, and an output by the first reference decoder comprises a first monitored output.

In one embodiment, the first channel matrix is the first monitored output, where the first reference decoder and the first decoder cannot be assumed to be identical.

In the above embodiment, the first reference decoder and the first decoder are probably independently generated or independently maintained, therefore, even if they both aim to perform an inverse operation of the first encoder, they are more likely to be similar rather than the same.

In one subembodiment, the first reference decoder is similar to the first decoder, so a CQI error caused by a difference between them is adjusted by the second node itself.

In one subembodiment, a CQI error caused by a difference between the first reference decoder and the first decoder is adjusted by a first amount of adjustment.

In one embodiment, the first receiver comprises a third processor in Embodiment 7.

In one embodiment, the first channel input belongs to a second data set in Embodiment 7.

In one embodiment, a training for the first encoder is used to determine the first amount of adjustment.

In one subembodiment, the training for the first encoder is used for obtaining the first encoder and the first reference decoder.

In one embodiment, the training for the first encoder is performed in the first node.

In one embodiment, the training for the first encoder is performed by the second node.

In one embodiment, the first recovered channel matrix is only known to the second node.

In one embodiment, the first recovered channel matrix and the first channel matrix cannot be assumed to be identical.

### Embodiment 9

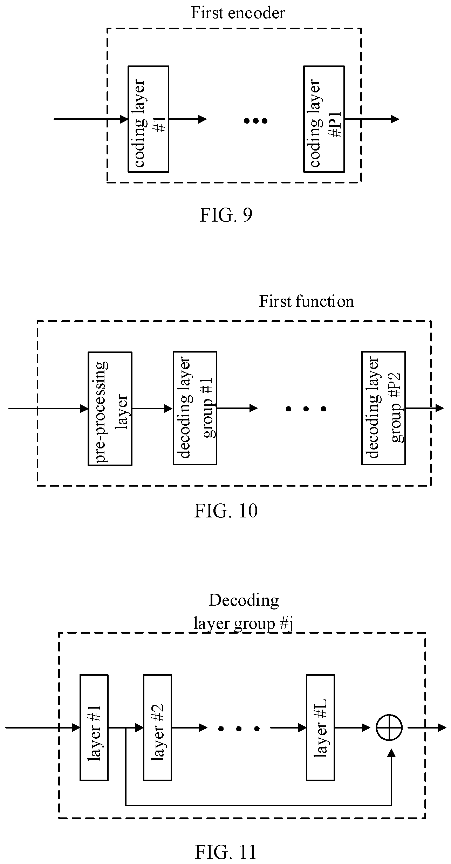

Embodiment 9 illustrates a schematic diagram of a first encoder according to one embodiment of the present application, as shown in FIG. 9. In FIG. 9, the first encoder comprises P1 coding layers, namely, coding layers #1, #2..., and #P1.

In one embodiment, P1 is 2, namely, the P1 coding layers include a coding layer #1 and a coding layer #2, the coding layer #1 and the coding layer #2 respectively being a Convolution layer and a Fully Connected layer; at the Convolution layer, at least one convolutional kernel is used for convoluting the first channel input for generating corresponding feature map(s), and at least one feature map output by the convolution layer is/are reshaped as a vector to be input to the Fully Connected layer; the Fully Connected layer converts the above vector into the first channel information. A more detailed description can be found in the technical literature related to CNNs, for example, Chao-Kai Wen, Deep Learning for Massive MIMO CSI Feedback, IEEE WIRELESS COMMUNICATIONS LETTERS, VOL. 7, NO. 5, OCTOBER 2018, etc.

In one embodiment, P1 is 3, namely, the P1 coding layers are respectively a Fully Connected layer, a Convolution layer and a Pooling layer.

### Embodiment 10

Embodiment 10 illustrates a schematic diagram of a first function according to one embodiment of the present application, as shown in FIG. 10. In FIG. 10, the first function comprises a pre-processing layer, as well as P2 decoding layer groups, i.e., decoding layer groups #1, #2..., #P2, where each decoding layer group comprises at least one decoding layer.

The structure of the first function is applicable to a first decoder and a first reference decoder in Embodiment 8.

In one embodiment, the pre-processing layer is a Fully Connected layer, which is to expand a size of the first channel information to a size of the first channel input.

In one embodiment, any two decoding layer groups among the P2 decoding layer groups have identical structures, where the structure comprises a number of decoding layers being comprised, as well as the size of an input parameter and the size of an output parameter of each decoding layer being comprised.

In one embodiment, a second node indicates the P2 and the structure of the decoding layer groups to a first node, and the first node indicates other parameters of the first function via the second signaling.

In one embodiment, the other parameters include at least one of a threshold of activation function, a size of convolutional kernel, a step-size of convolutional kernel, or a weight among feature maps.

### Embodiment 11

Embodiment 11 illustrates a schematic diagram of a decoding layer group according to one embodiment of the present application, as shown in FIG. 11. In FIG. 11, the decoding layer group #j consists of L layers, i.e., layer #1, layer #2..., and layer #L; the decoding layer group is any decoding layer group among the P2 decoding layer groups.

In one embodiment, L is 4; a first layer among the L layers is an input layer, while the last three of them are convolution layers; for more detailed descriptions, refer to technical literature of CNN, for instance, Chao-Kai Wen, Deep Learning for Massive MIMO CSI Feedback, IEEE WIRELESS COMMUNICATIONS LETTERS, VOL. 7, NO. 5, OCTOBER 2018, etc.

In one embodiment, the L layers include at least one convolution layer and a pooling layer.

### Embodiment 12

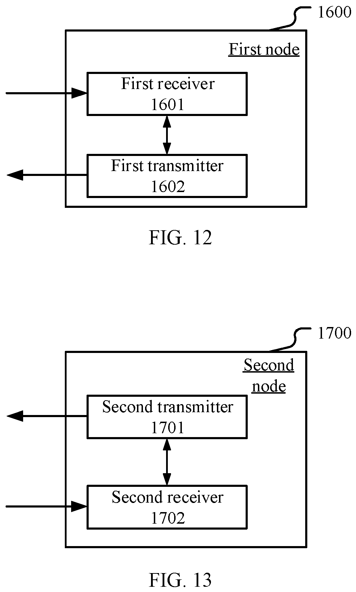

Embodiment 12 illustrates a structure block diagram of a processing device used in a first node according to one embodiment of the present application, as shown in FIG. 12. In FIG. 12, a processing device 1600 in a first node is comprised of a first receiver 1601 and a first transmitter 1602.

The first receiver 1601 receives a first reference signal; the first transmitter 1602 transmits first channel information and a first CQI.

In Embodiment 12, a measurement of the first reference signal is used to generate the first channel information; calculation of the first CQI is related to a type of the first channel information; the type of the first channel information is one of a PMI (i.e., Precoding matrix indicator) or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node.

In one embodiment, when the type of the first channel information is the first type, the first channel matrix is an output obtained after inputting the first channel information to a first reference decoder, the first reference decoder being available only for the first node.

In one embodiment, when the type of the first channel information is the first type, the first channel matrix is used together with a first amount of adjustment to calculate the first CQI.

In one embodiment, when the type of the first channel information is the first type, calculation of the first CQI is conditioned on that a first reference channel matrix is used for precoding, and the first amount of adjustment is used together with the first channel matrix to generate the first reference channel matrix.

In one embodiment, when the type of the first channel information is the first type, a channel quality calculated conditioned on that the first channel matrix is used for precoding is used together with the first amount of adjustment to determine the first CQI.

In one embodiment, the first receiver 1601 generates the first channel information utilizing a first encoder;

herein, an input to the first encoder includes the first channel matrix, the first encoder being obtained through training.

In one embodiment, the first channel matrix is a pre-coding matrix used for computing a CQI based on the assumption that the type of the first channel information is PMI.

In one embodiment, the first receiver 1601 receives a first signaling, the first signaling indicating the first amount of adjustment.

In one embodiment, the first node 1600 is a UE.

In one embodiment, the first transmitter 1602 comprises at least one of the antenna 452, the transmitter/receiver 454, the multi-antenna transmitting processor 457, the transmitting processor 468, the controller/processor 459, the memory 460 or the data source 467 in FIG. 4 of the present application.

In one embodiment, the first transmitter 1602 comprises the antenna 452, the transmitter/receiver 454, the multi-antenna transmitting processor 457, the transmitting processor 468, the controller/processor 459, the memory 460 and the data source 467 in FIG. 4 of the present application.

In one embodiment, the first receiver 1601 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first three of the antenna 452, the receiver 454, the multi-antenna receiving processor 458, the receiving processor 456, the controller/processor 459, the memory 460 and the data source 467 in FIG. 4 of the present application.

### Embodiment 13

Embodiment 13 illustrates a structure block diagram of a processing device used in a second node according to one embodiment of the present application, as shown in FIG. 13. In FIG. 13, a processing device 1700 in a second node is comprised of a second transmitter 1701 and a second receiver 1702.

The second transmitter 1701 transmits a first reference signal; the second receiver 1702 receives first channel information and a first CQI.

In Embodiment 13, a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second node.

In one embodiment, the second receiver 1702 generates a first recovered channel matrix utilizing a first decoder; herein, an input to the first decoder comprises the first channel information, the first decoder being obtained through training.

In one embodiment, the second transmitter 1701 transmits a first signaling, the first signaling indicating a first amount of adjustment;

herein, when the type of the first channel information is the first type, the first channel matrix is used together with the first amount of adjustment to calculate the first CQI.

In one embodiment, the second node 1700 is a base station.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second receiver 1702 comprises the antenna 420, the receiver 418, the multi-antenna receiving processor 472, the receiving processor 470, and the controller/processor 475.

In one embodiment, the second receiver 1702 comprises the controller/processor 475.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first reference signal; and
a first transmitter, transmitting first channel information and a first CQI;
wherein a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node.

2. The first node according to claim 1, **characterized in that** when the type of the first channel information is the first type, the first channel matrix is an output obtained after inputting the first channel information to a first reference decoder, the first reference decoder being available only for the first node.

3. The first node according to claims 1 or 2, **characterized in that** when the type of the first channel information is the first type, the first channel matrix is used together with a first amount of adjustment to calculate the first CQI.

4. The first node according to claim 3, **characterized in that** when the type of the first channel information is the first type, calculation of the first CQI is conditioned on that a first reference channel matrix is used for precoding, and the first amount of adjustment is used together with the first channel matrix to generate the first reference channel matrix.

5. The first node according to claim 3, **characterized in that** when the type of the first channel information is the first type, a channel quality calculated conditioned on that the first channel matrix is used for precoding is used together with the first amount of adjustment to determine the first CQI.

6. The first node according to any of claims 3-5, **characterized in** comprising:
the first receiver, generating the first channel information utilizing a first encoder;
wherein an input to the first encoder includes the first channel matrix, the first encoder being obtained through training.

7. The first node according to any of claims 1-6, **characterized in that** the first channel matrix is a codebook-based precoding matrix, the first type being non-codebook-based channel information.

8. The first node according to any of claims 3-7, **characterized in** comprising:
the first receiver, receiving a first signaling, the first signaling indicating the first amount of adjustment.

9. A second node for wireless communications, comprising:
a second transmitter, transmitting a first reference signal; and
a second receiver, receiving first channel information and a first CQI;
wherein a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second node.

10. The second node according to claim 9, **characterized in** comprising:
the second receiver, generating a first recovered channel matrix utilizing a first decoder;
wherein an input to the first decoder includes the first channel information, the first decoder being obtained through training.

11. The second node according to claim 9 or 10, **characterized in** comprising:
the second transmitter, transmitting a first signaling, the first signaling indicating a first amount of adjustment;
wherein when the type of the first channel information is the first type, the first channel matrix is used together with the first amount of adjustment to calculate the first CQI.

12. The second node according to any of claims 9-11, **characterized in that** when the type of the first channel information is the first type, the first channel matrix is an output obtained after inputting the first channel information to a first reference decoder, the first reference decoder being available only for the first node.

13. The second node according to any of claims 1-12, **characterized in that** when the type of the first channel information is the first type, the first channel matrix is used together with a first amount of adjustment to calculate the first CQI.

14. The second node according to claim 13, **characterized in that** when the type of the first channel information is the first type, calculation of the first CQI is conditioned on that a first reference channel matrix is used for precoding, and the first amount of adjustment is used together with the first channel matrix to generate the first reference channel matrix.

15. The second node according to claim 13, **characterized in that** when the type of the first channel information is the first type, a channel quality calculated conditioned on that the first channel matrix is used for precoding is used together with the first amount of adjustment to determine the first CQI.

16. The second node according to any of claims 9-15, **characterized in that** the first channel matrix is a codebook-based precoding matrix, the first type being non-codebook-based channel information.

17. A method in a first node for wireless communications, comprising:
receiving a first reference signal; and
transmitting first channel information and a first CQI;
wherein a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix being available only for the first node.

18. The method in the first node according to claim 17, **characterized in that** when the type of the first channel information is the first type, the first channel matrix is an output obtained after inputting the first channel information to a first reference decoder, the first reference decoder being available only for the first node.

19. The method in the first node according to claim 17 or 18, **characterized in that** when the type of the first channel information is the first type, the first channel matrix is used together with a first amount of adjustment to calculate the first CQI.

20. The method in the first node according to claim 19, **characterized in that** when the type of the first channel information is the first type, calculation of the first CQI is conditioned on that a first reference channel matrix is used for precoding, and the first amount of adjustment is used together with the first channel matrix to generate the first reference channel matrix.

21. The method in the first node according to claim 19, **characterized in that** when the type of the first channel information is the first type, a channel quality calculated conditioned on that the first channel matrix is used for precoding is used together with the first amount of adjustment to determine the first CQI.

22. The method in the first node according to any of claims 19-21, **characterized in** comprising:
generating the first channel information utilizing a first encoder;
wherein an input to the first encoder includes the first channel matrix, the first encoder being obtained through training.

23. The method in the first node according to any of claims 17-22, **characterized in that** the first channel matrix is a codebook-based precoding matrix, the first type being non-codebook-based channel information.

24. The method in the first node according to any of claims 19-23, **characterized in** comprising:
receiving a first signaling, the first signaling indicating the first amount of adjustment.

25. A method in a second node for wireless communications, comprising:
transmitting a first reference signal; and
receiving first channel information and a first CQI;
wherein a measurement of the first reference signal is used to generate the first channel information; calculation of the first CQI is related to a type of the first channel information; the type of the first channel information is one of a PMI or a first type; when the type of the first channel information is PMI, the calculation of the first CQI is conditioned on a precoding matrix indicated by the first channel information; when the type of the first channel information is the first type, a measurement of the first reference signal is used to generate a first channel matrix, the first channel matrix being used to generate the first CQI, and the first channel matrix is unavailable for the second node.

26. The method in the second node according to claim 25, **characterized in** comprising:
generating a first recovered channel matrix utilizing a first decoder;
wherein an input to the first decoder includes the first channel information, the first decoder being obtained through training.

27. The method in the second node according to claim 25 or 26, **characterized in** comprising:
transmitting a first signaling, the first signaling indicating a first amount of adjustment;
wherein when the type of the first channel information is the first type, the first channel matrix is used together with the first amount of adjustment to calculate the first CQI.

28. The method in the second node according to any of claims 25-27, **characterized in that** when the type of the first channel information is the first type, the first channel matrix is an output obtained after inputting the first channel information to a first reference decoder, the first reference decoder being available only for the first node.

29. The method in the second node according to any of claims 25-28, **characterized in that** when the type of the first channel information is the first type, the first channel matrix is used together with a first amount of adjustment to calculate the first CQI.

30. The method in the second node according to claim 29, **characterized in that** when the type of the first channel information is the first type, calculation of the first CQI is conditioned on that a first reference channel matrix is used for precoding, and the first amount of adjustment is used together with the first channel matrix to generate the first reference channel matrix.

31. The method in the second node according to claim 29, **characterized in that** when the type of the first channel information is the first type, a channel quality calculated conditioned on that the first channel matrix is used for precoding is used together with the first amount of adjustment to determine the first CQI.

32. The method in the second node according to any of claims 25-31, **characterized in that** the first channel matrix is a codebook-based precoding matrix, the first type being non-codebook-based channel information.
